# EUROPEAN PATENT SPECIFICATION

(11) **EP 3 179 674 B1**
(45) Date of publication and mention of the grant of the patent: **03.04.2019**
(21) Application number: 15198787.2
(22) Date of filing: 10.12.2015
(51) Int. Cl.: H04L 12/40, B60T 13/66, B60T 17/22, B61H 13/00

(54) **CONFIGURABLE GATEWAY APPARATUS AND METHOD FOR AN INTEGRATED BRAKE CONTROL SYSTEM IN A RAILWAY VEHICLE**
KONFIGURIERBARE GATEWAY-VORRICHTUNG UND VERFAHREN FÜR EIN INTEGRIERTES BREMSSTEUERUNGSSYSTEM IN EINEM SCHIENENFAHRZEUG
APPAREIL DE PASSERELLE CONFIGURABLE ET PROCÉDÉ POUR UN SYSTÈME DE COMMANDE DE FREIN INTÉGRÉ DANS UN VÉHICULE FERROVIAIRE

(43) Date of publication of application: 14.06.2017
(73) Proprietor: KNORR-BREMSE Systeme für Schienenfahrzeuge GmbH, 80809 München (DE)
(72) Inventor: Korcsmar, Balint, 1137 Budapest (HU)

(56) References cited:
- EP-A1- 1 065 127
- EP-A1- 2 383 162
- WO-A1-2014/184952
- US-A1- 2009 050 380
- HUBERT KIRRMANN: "THE IEC/IEEE TRAIN COMMUNICATION NETWORK", IEEE MICRO, IEEE SERVICE CENTER, LOS ALAMITOS, CA, US, 1 January 2001 (2001-01-01), pages 81-92, XP002471919, ISSN: 0272-1732

## Description

The present invention relates to a gateway apparatus and method for a brake control system comprising a central control apparatus for controlling the brake system in a rail vehicle, and a local control apparatus for providing brake control in the rail vehicle.

A current standard communications design in a railway vehicle comprises a Controller Area Network (CAN) bus which enables data to be communicated along the train between devices including brake control units. This enables use of standard laptop computers to operate diagnostic software and the like, which laptops can be plugged into the CAN bus and be used to communicate with the brake control units.

US 2015/0381458 A1 discloses a communication apparatus for establishing a communication connection between a backbone network and branch networks formed in a fixed formation. EP 1065 127 A1 discloses an apparatus and a method for establishing a communication connection between the internal bus systems of rail vehicles via gateways.

The US 2014/0257604 A1 discloses a braking system with a brake control unit for a railway vehicle having first and second cores. The first core is responsible for brake control functions and the second core is responsible for communications. A switch controls communication between the second core and a communication bus on the railway vehicle to safeguard the braking function of the first core. The second core only has write access to the communication bus when enabled by the first core, which first core determines whether the system is in a defined safe state to safeguard the braking function. This reduces the testing requirements for new communications software.

However, such a dual-core approach requires support of base or core software interfaces of existing products. Such compatibility would mean keeping disadvantages of existing systems within the new system and would thus cause an unacceptable increase in complexity for developers and/or users.

It is therefore an object of the present invention to provide an improved brake control system with a simple system configuration that is not restricted in its functional range and open for upgrades.

This object is solved by a gateway apparatus according to claim 1, a unit device according to claim 9, a brake control system according to claim 10, a method according to claim 12 and a computer program product according to claim 13.

Accordingly, a gateway apparatus is provided for establishing a communication connection between at least two channels of an internal CAN bus system which connects internal components of a unit device of a distributed brake control system in a rail vehicle and at least two channels of an external CAN bus system which connects different ones of the unit device of the distributed brake control system, wherein the apparatus is adapted to configure a routing mode between the channels of the internal CAN bus system and the channels of the external CAN bus system in response to a routing control information supplied by an external coding device. Thereby, a configurable access between an external CAN bus system and the internal CAN bus system can be provided in the distributed brake system. The unit devices may provide brake-control specific application logic of a lower logic level for local application devices of a vehicle segment of the rail vehicle. The brake-control specific application logic is then received by local control apparatuses for providing brake control in the vehicle segment of the rail vehicle in response to the brake-control specific application logic. According to the invention, the gateway apparatus or functionality is also adapted to route extended CAN frames of the internal and external CAN bus systems according to a most significant bit of a CAN identification code.

The proposed method may be implemented by a computer program product comprising code means for producing the step of the method when run on a computer device. The computer program product may be provided on a computer readable medium or may be downloadable from a local or public network, such as the internet.

The suggested configurable gateway functionality enables flexible and effective communication within and between unit devices of the distributed brake control system, wherein the railway vehicle (e.g. train) can be built up of several segments which can be organized in consists. Moreover, standard functions (which may be called local applications) may run on local application devices so that the local applications are configurable, e.g., by generic software, to thereby provide enhanced system standardization.

The proposed integrated brake control system structure can be implemented as a configurable system with a software or process structure of a high level of abstraction from actual software and communication interfaces, so that a user can place his/her focus on the design of a control system for braking a train. Interfaces to higher-level communication systems (e.g. MVB, CAN open, PROFI Net etc.) can be generic and - as far as possible - identical in their usage. Moreover, suitable tools can be provided for supporting the users on their engineering work.

The proposed new architecture of the brake system can be partly implemented on existing brake control hardware (such as ESRA, MBS, EPC or EP 2002) in local control apparatuses of the unit devices. However, base or core software interfaces of existing products do not need to be supported, so that disadvantages of existing systems do not need to be kept in the new brake control system and unacceptable increase in complexity for the developers and/or users can be prevented.

Furthermore, the integrated brake control system with the proposed configurable gateway functionality can be implemented in a framework of open technology that is not restricted to an actual functional range. The whole system is open for new functions and products that can be easily integrated. Software installation is simplified and upgrades can be used to reduce efforts for customers. Moreover, improved software consistency checks can be provided, where the brake system checks whether all installed components are supplied with correct software and configurations. Inconsistencies may either be solved or clearly indicated with severe diagnosis messages.

Optionally, the gateway apparatus may have a master control status within a related unit device. Thereby, a master-slave cooperation concept can be provided between the gateway apparatus and the components of the unit device, so that all local components (e.g. central intelligence device, local application devices, etc.) obey the commands or arrangement of the gateway apparatus. The gateway apparatus can thus also be called master apparatus, and the unit components can be called slave apparatuses. The master apparatus sends its commands or arrangements to the slave apparatus, and the slave apparatus will act as the master apparatus instructs providing the feedbacks and results to the master apparatus.

As another option, the internal and external CAN bus systems may be a redundant dual-bus system, wherein the channels are controller area network channels. Thereby, a safe and reliable communication can be achieved. As an example, periodicity of messages can be controlled based on their priority, if one bus of the dual-bus system fails. Thereby, it can be ensured that messages of higher priority are signaled more often to enhance reliability.

Optionally, the gateway apparatus or functionality may be adapted to establish the communication connection between local application devices and central intelligence devices of the unit devices of the distributed brake control system.

As a further option, the gateway apparatus or functionality may be adapted to provide addressing information to local application devices of the same unit device in the form of unit master broadcast messages sent to the internal bus system. As an example, the addressing information may comprise a unit identification and a subnet identification.

As a still further option, the gateway apparatus or functionality may be adapted to independently configure transmission rates on the channels, so that channel transmission can be optimized in relation to a channel's purpose or use.

As an example of the proposed configurable routing mode, the gateway apparatus or functionality may be adapted to configure one of a default routing mode, a single routing mode and a dual routing mode in response to the routing control information.

It is noted that the gateway apparatus may be implemented based on discrete hardware circuitry with discrete hardware components, an integrated chip, or an arrangement of chip modules, or based on a single processing device or chip controlled by a software routine or program stored in a memory, written on a computer readable medium, or downloaded from a network, such as the internet.

Furthermore, it shall be understood that the gateway apparatus of claim 1, the unit device of claim 9, the brake control system of claim 10, the method of claim 12 and the computer program of claim 13 may have similar and/or identical preferred embodiments, in particular, as defined in the dependent claims.

It shall further be understood that a preferred embodiment of the invention can also be any combination of the dependent claims or above embodiments with the respective independent claim.

The present invention will now be described based on embodiments with reference to the accompanying drawings in which:
- Fig. 1: shows a schematic block diagram of a distributed brake control system in which the present invention can be implemented;
- Fig. 2: shows a schematic network structure of the distributed brake control system with different network levels of communication, in which the present invention can be implemented;
- Fig. 3: shows a schematic architecture of a gateway device according to a first embodiment;
- Fig. 4: shows a schematic block diagram of a gateway device with system boundary within a first specific unit device according to a second embodiment;
- Fig. 5: shows a schematic block diagram of a gateway device with system boundary within a second specific unit device according to a third embodiment;
- Fig. 6: shows a schematic block diagram of a third specific unit device according to a fourth embodiment;
- Fig. 7: shows a schematic block diagram of a fourth specific unit device according to a fifth embodiment;
- Fig. 8: shows a schematic block diagram of the second specific unit device according to a fourth embodiment;
- Fig. 9: shows an explanatory functional diagram of a default mode routing;
- Fig. 10: shows an explanatory functional diagram of a single mode routing; and
- Fig. 11: shows an explanatory functional diagram of a dual mode routing.

In the following, preferred embodiments of the present invention will be described on the basis of a distributed brake control system with a modular framework consisting of hardware framework components driven by a software framework, which provide a high level of standardization and efficient tooling using existing electronic hardware as well as new hardware products.

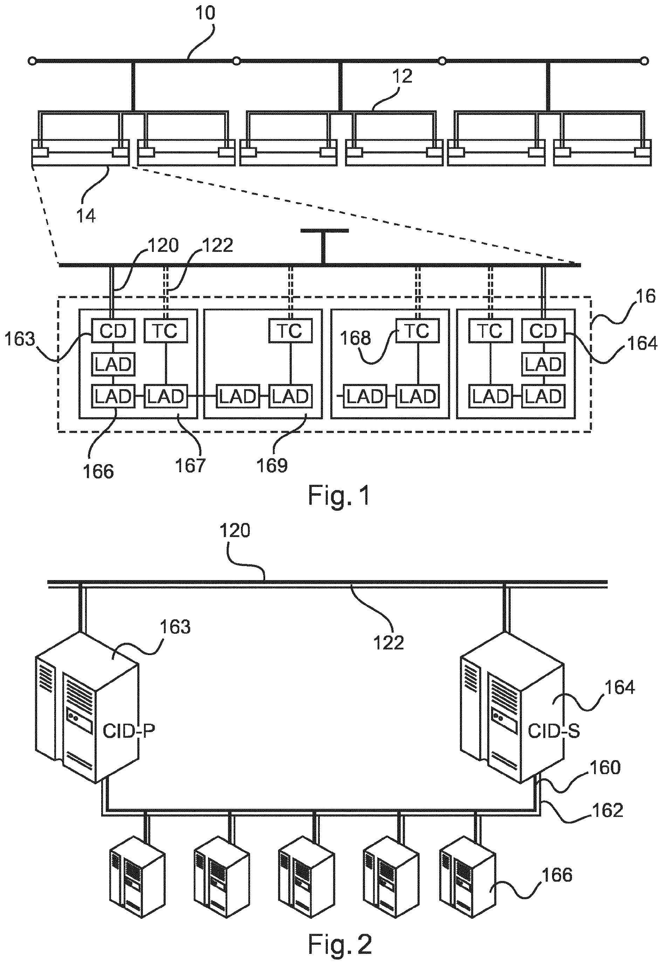

Fig. 1 shows a schematic block diagram of an integrated brake control (IBC) system according to various embodiments, wherein a train control and management system with a train network 10 and a consist network 12 which connects central intelligence device (CID) segments 14 for train network communications is connected to individual CIDs 163 of an IBC segment 16 of the brake control system. Thereby, a generic train model of a multi-consist train with multi-segment consists is provided. If a redundant system architecture is implemented, an optional redundant CID 164 may be provided for redundant control. A project specific logic which comprises brake algorithms and the like is implemented on the CIDs 163, 164. Furthermore, local application devices (LAD) 166 on which local applications (LA) for specific local brake controls are running, are provided in a CID unit device 167 or in an LAD unit device 169 without CID functionality. Additionally, a traction control unit (TC) 168 is provided in each unit device of the IBC segment 16.

The CIDs 163, 164 comprise central control apparatuses for controlling communication via the higher level consist or train networks 10, 12 via a first interface and for controlling communication on a segment level safety network via a second interface for providing brake-control specific application logic for local control apparatuses provided at the local application devices 166.

The central control apparatus at the CIDs 163, 164 may be implemented as a powerful CPU module which provides the application logic for brake control of the segment. A train may be built of several IBC segments 16 (which can be organized in consists), wherein the CIDs 163, 164 may also be capable of implementing train functionality, coordinating consists and segments.

Standard brake control functions (called local applications (LA)) are running on the remote local application devices 166 and may be implemented as configurable, generic software to thereby force system standardization.

The CIDs 163,164 provide project-specific brake control system application logic for the controlled vehicle segment and the gateway functionality to the higher communication levels of the train or consist level networks 10, 12. All CIDs of the train may support the same software and may use the same electronic circuit design. However, form factor and connectors may differ to enable integration into different products. The local application devices 166 provide input/output (I/O) interfaces to vehicle hardware (i.e. brake control hardware or the like) and support primary functions of brake control. Complexity of the local application devices 166 may vary on a wide range. Simple I/O LADs 166 supporting electrical interfaces e.g. to a wired train bus or any pneumatic components may be provided. On the other hand, very complex LADs 166 supporting service brake control, WSP, load calculation, diagnosis, etc. may be provided as well. The LADs 166 may comprise new or existing electronic hardware.

Fig. 2 shows a schematic network structure of the distributed brake control system with different safety network levels of communication, in which the present invention can be implemented. The control between the CIDs 163, 164 and the LADs 166 can be based on a master-slave principle, wherein the CIDs 163, 164 act as brake control masters with a master status and the LADs 166 act as brake control slaves with a slave control status. The CIDs 163, 164 are configured to provide a central brake control function, which may be the only part in a system with project-specific logic of the brake control system. A level 1 safety network bus 160, 162 connects the master CIDs 163, 164 and the slave LADs 166 within a train segment or car and possibly also across train segments and cars and is configured to provide a generic, safe and reliable communication. As an example, it may be realized as a redundant dual CAN bus which consists of two redundant busses 160, 162. The communication via the level 1 safety network bus can be based on an application interface descriptor (AID). As can be gathered from Fig. 2, the CIDs 163, 164 are also connected to a level 2 safety network bus 120, 122 which may for example be also realized as a redundant dual CAN bus which consists of two redundant busses 120, 122.

The slave LADs 166 may be provided with local brake control functions implemented by standardized configurable software and may be directed to wheel slide protection, pressure control, detection of unstable running and the like.

The redundant master CID 164 may operate in a hot standby state to increase availability. The hot standby state is a redundant state in which the redundant CID 164 runs simultaneously with the non-redundant CID 163. Upon failure of the non-redundant CID 163, the redundant CID 164 in the hot standby state immediately takes over the role of the non-redundant CID 163 and replaces its functions. Data may be mirrored in real time, so that both devices have identical data. The hot standby state ensures system reliability and security by having the redundant CID 164 ready to take over in the event of a failure of the non-redundant CID 163.

The slave LADs 166 send their data to both CIDs 163, 164, which both process the data, but only the active CID 163 sends its data on the safety network bus 160, 162.

The safety network bus 160, 162 may be adapted to provide a proprietary mechanism which ensures that in case of failure of one bus in a dual-bus configuration high priority messages are delivered with same periodicity and normal messages are delivered with half of the periodicity of the error-free case. Thereby, high priority messages are delivered more often through the remaining single bus than normal messages.

The slave LADs 166 may have fixed, but configurable functions which can be based on software that is not project specific. Thereby, local brake control functions can be implemented with standardized configurable software and new products or functions can be easily integrated, since they only have to comply with the interface definition and logic of the safety network bus 160, 162 of the integrated brake control system.

With the above functionalities, the integrated brake control system facilitates realization and implementation of train-wide functions such as brake management, brake force distribution and brake tests, train-wide maintenance can be achieved through a single interface (e.g. for software installation), and train-wide data logs can be synchronized. Thereby, engineering effort can be reduced and turnaround times can be shortened, while quality can be improved through usage of standardized, non-project specific functions.

Due to the fact that the proposed brake control system can be implemented on a vehicle segment basis, different vehicle segments or cars with different local brake control functions can be combined via the safety network bus 160, 162 to achieve easy inter-operability through the whole train. Moreover, the proposed integrated brake control system allows that new train control network protocols can be developed only once.

According to embodiments of the present invention, the safety network is split into an external level 1 safety network and an internal level 1 safety network. Both can be implemented as dual redundant CAN networks. In the following, the channels of the safety networks are called internal CAN A and CAN B channels and external CAN A and CAN B channels. As already mentioned above, the devices of the IBC system are organized to build unit devices. Each unit device consists of a gateway device and a CID device or several LAD devices.

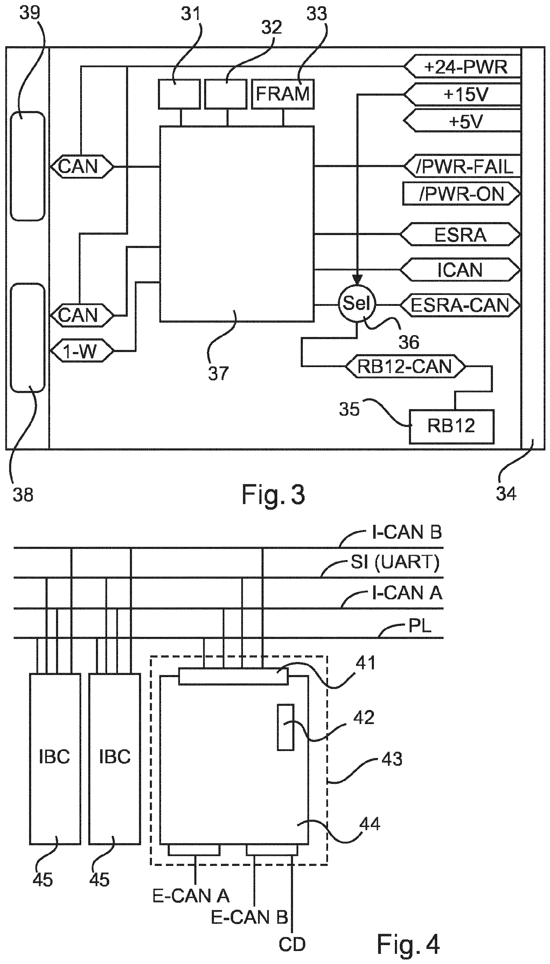

Fig. 3 shows an architecture of a gateway device 44 according to a first embodiment. Here, the gateway device 44 is a 5-channel CAN communication gateway that can establish a communication connection between LADs and CIDs of an IBC system. It can play the role of a unit master within the unit devices of the IBC system.

More specifically, the gateway device 44 comprises a central controller 37 for controlling the functions of the gateway device 44 based on software routines. The gateway device 44 is configured to provide a gateway functionality between the external CAN channels (which are operated at a transmission rate of e.g. 250kBaud) and the internal CAN channels (which are operated at a transmission rate of e.g. 500kBaud). Furthermore, the gateway device 44 acts as CAN repeater between the external CAN channels and the internal CAN channels. It shall be transparent for communication between CID and LADs and is adapted to be controlled by an external coding device, e.g., via a one-wire connection. To achieve this, the gateway device 44 comprises dual CAN bus front connectors 38, 39 for providing connections to the external CAN A and CAN B channels and a one-wire interface (1-W) for the external coding device. Thus, for connection of the external coding device one of the external dual CAN connectors 38, 39 on the front plate is used.

Additionally, a back plane connector 34 provides connections for power supply, a serial interface (e.g. UART), and internal CAN bus interfaces for a CAN A bus and a CAN B bus. The back plane connector may be compatible with the ESRA back planes specification, for example.

Moreover, the gateway device 44 comprises a selector circuit 36 for selecting an LAD10 channel via an RB 12 connector 35, a crypto device 31 for encryption, a watchdog timer 32 and a FRAM memory 33.

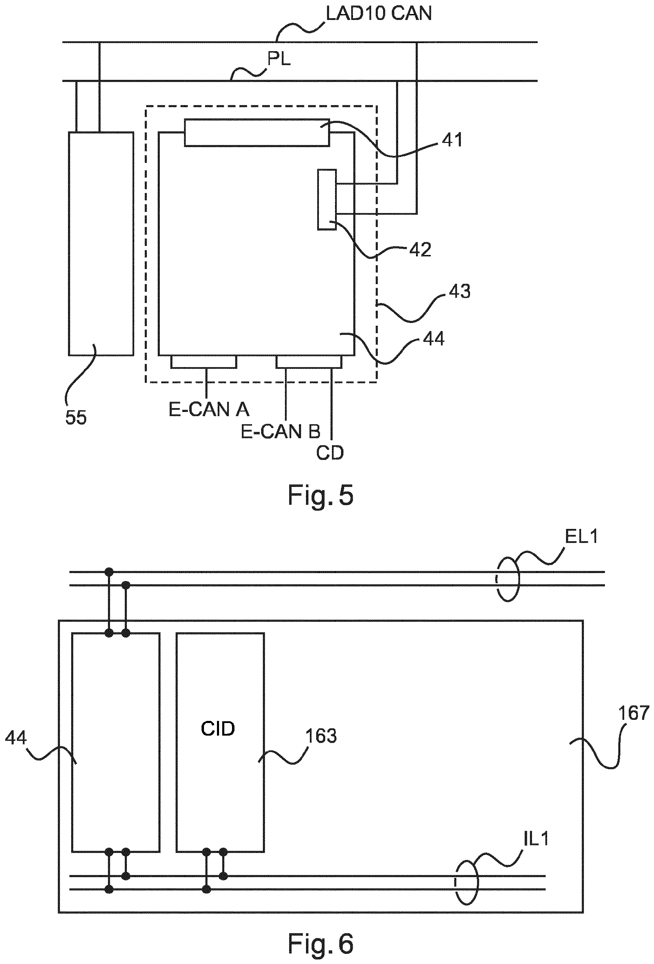

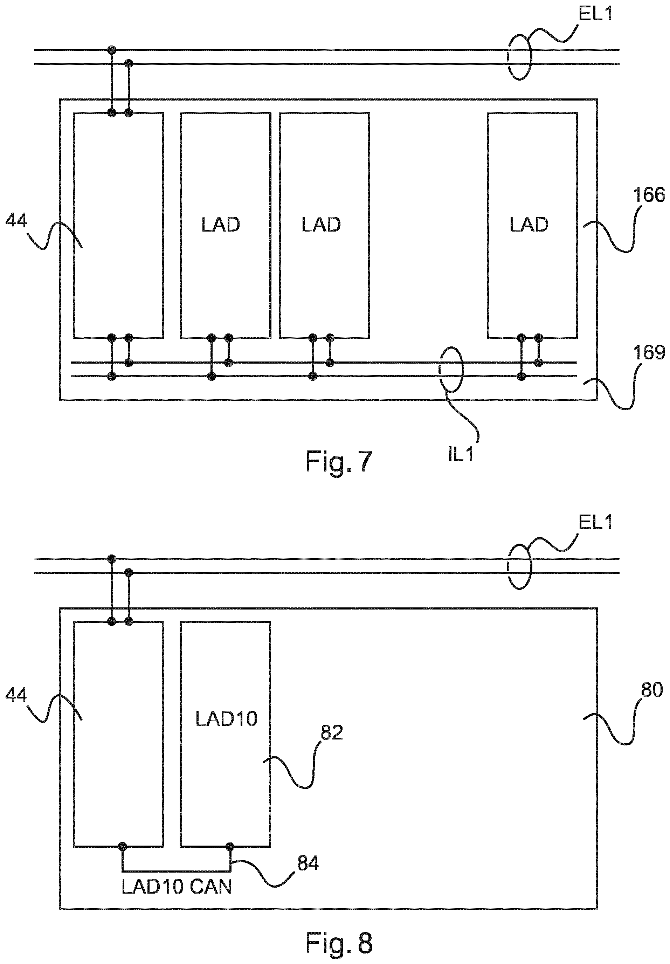

The selector circuit 36 selects either the internal level 1 CAN A channel or the LAD10 channel based on the presence of a +15V signal at the backplane connector 34. This feature allows the usage of the gateway device 44 in a special unit device shown in Figs. 5 and 8, as explained later.

The crypto device 31 may be an external programmable read-only memory (e.g. an electrically erasable and programmable read-only memory (EEPROM)) connected to the central controller 37 of the gateway device 44 via a one-wire bus. It stores manufacturing information and secret data that allows verification of authenticity of the gateway device 44.

In the embodiments, the gateway device 44 is provided in different types of unit devices which define interfaces and connections required for communication in the IBC system. Several unit devices (e.g. IBC units) form an IBC subnet.

Fig. 4 shows a schematic block diagram of a gateway device with system boundary within a first specific unit device according to a second embodiment. The first specific unit device comprises the gateway device 44 and IBC boards 45 connected via a backplane connector 41 which provides interfaces for internal CAN A bus (I-CAN A), internal CAN B bus (I-CAN B), a serial interface (SI), and a power line (PL). Furthermore, an LAD 10 connector 42 and front plane connectors for providing interfaces to the external CAN A bus (E-CAN A), the external CAN B bus (E-CAN B) and the one-wire interface to the external coding device (CD). The dotted line indicates the system boundary 43 of the gateway device within the unit device. The IBC boards 45 represent specific components of the respective unit device, such as CID or LAD devices.

During system configuration, the gateway device 44 reads out a serial number, subnet identity (ID), unit identity (ID), the operation mode (routing mode) and an error correction code from the coding device via the one-wire interface and sends it via the internal CAN busses to the CID of the same unit device. Furthermore, the gateway device 44 broadcasts the serial number, subnet ID, unit ID, routing mode, and error correction code to the internal CAN busses of its unit device.

Fig. 5 shows a schematic block diagram of a gateway device with system boundary within a second specific unit device according to a third embodiment. Here, a special unit device of the IBC system is shown, which comprises the gateway device 44 together with a special LAD10 device 55. Communication between the gateway device 44 and the LAD10 device 55 is achieved over a single CAN channel (LAD10 CAN).

Fig. 6 shows a schematic block diagram of a third specific unit device according to a fourth embodiment. Here, the gateway device 44 is provided in the unit device 167 together with a CID 163 to which it is connected via the internal level 1 network IL1, while the gateway device 44 provides a connection to other unit devices (not shown in Fig. 6) via the external level 1 network EL1.

Fig. 7 shows a schematic block diagram of a fourth specific unit device according to a fifth embodiment. Here, the gateway device 44 is provided in the unit device 169 together with a plurality of LADs 166 to which it is connected via the internal level 1 network IL1, while the gateway device 44 provides a connection to other unit devices (not shown in Fig. 7) via the external level 1 network EL1.

Fig. 8 shows a schematic block diagram of the second specific unit device according to a fourth embodiment. Here, the gateway device 44 is provided in a unit device 80 together with the single LAD 10 device 82 to which it is connected via an LAD10 CAN channel 84 (similar to the third embodiment of Fig. 5), while the gateway device 44 provides a connection to other unit devices (not shown in Fig. 8) via the external level 1 network EL1.

As mentioned above, the gateway device 44 communicates with CID and LAD devices within the same unit device on the internal level 1 network IL1 and communicates in the external level 1 network EL1 with components in other unit devices, and thus establishes connections between the internal level 1 networks IL1 and external level 1 networks EL1. The transmission rate or baud rate of the safety network channels (CAN channels) can be independently configured at the gateway device 44.

Moreover, the routing mode between the channels of the external level 1 network EL1 and the internal level 1 network IL1 is configurable at the gateway device 44 via the external coding device. As an example of the embodiments, a default routing mode, a single routing mode and a dual routing mode may be provided for selection. Extended CAN frames may be routed according to the value of the most significant bit (MSB) of the CAN frame's CAN ID.

The coding device may be an external programmable read-only memory (e.g. an electrically erasable and programmable read-only memory (EEPROM) or the like) which is connected to the central controller (e.g. microprocessor) 37 of gateway device 44 via the one-wire connection. It stores the routing mode or operating mode (single, dual) and the address of the unit device (Unit ID) and the subnet (Subnet ID). As already mentioned, the gateway device 44 provides the addressing information (e.g. Unit ID and Subnet ID) to the LADs in the same unit device by means of unit master broadcast CAN messages sent to the internal level 1 network IL1 as t plays the role of the unit master. The value of the Subnet ID is configurable by the CID.

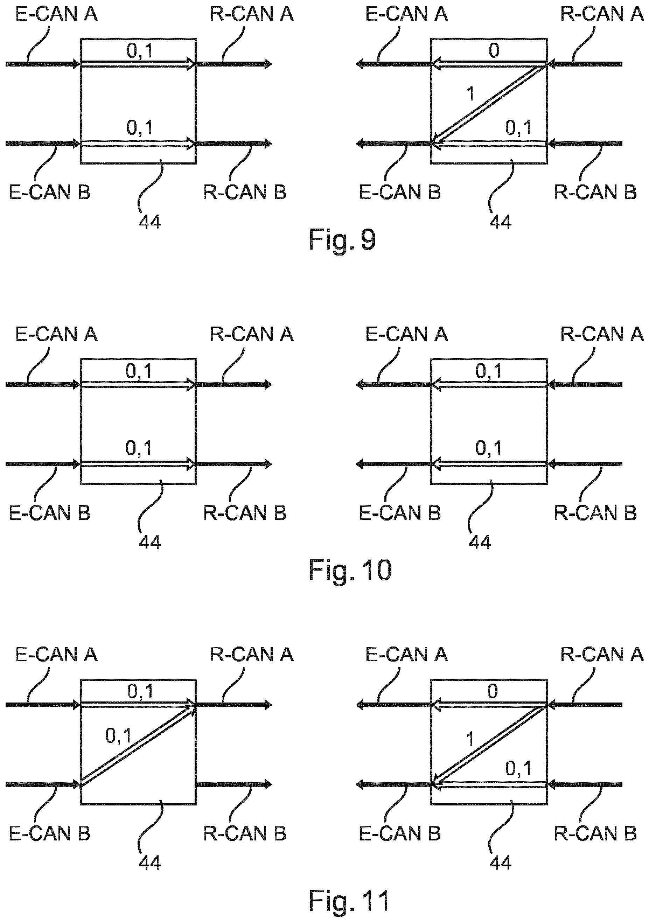

In the following, different routing modes which can be implemented in the gateway device 44 according to the above embodiments are described in more detail with reference to Figs. 9. to 11. CAN messages are forwarded by the gateway device 44 according to routing rules defined by the operating mode or routing mode. More specifically, the selection of a forwarding CAN channel by the gateway device 44 is dependent on the active routing mode. These routing modes are the default routing mode, the single routing mode and the dual routing mode. The default routing mode is selected after startup while reading the contents of the coding device or if the coding device could not be read or if the CID stated that the device is unknown. In any other case, the gateway device 44 may operate in the single or dual routing mode according to the content of the single field of the coding device, which defines the routing mode.

Fig. 9 shows an explanatory functional diagram of the default mode routing, wherein the left diagram relates to routing for communication from external (E-CAN A, B) to internal channels (Rach channels A, B (R-CAN A, B)) and the right diagram relates to the routing for communication from internal (R-CAN A, B) to external channels (E-CAN A, B).

In the default routing mode, CAN frames received from the external CAN channel A are forwarded to the internal Rack CAN channel A, and CAN frames received from the external CAN channel B are forwarded to the internal Rack CAN channel B, as indicated in the left diagram of Fig. 9.

Furthermore, in the default routing mode, CAN frames received from the internal Rack CAN channel A (R-CAN A) are forwarded to the external CAN channel A or B depending on the value of the CAN channel field of the packet ID of the frame. E.g., if the value of the CAN channel field is "0", the external channel A is selected. If the value of the CAN channel field is "1", the external channel B is selected. Forward frames received from the internal Rack channel B are always forwarded to the external CAN channel B regardless of the value of the channel field, as indicated in the right diagram of Fig. 9.

Fig. 10 shows an explanatory functional diagram of a single routing mode.

In the single routing mode, CAN frames received from the external CAN channel A are forwarded to the internal Rack CAN channel A, and CAN frames received from the external CAN channel B are forwarded to the same internal Rack CAN channel A, as indicated in the left diagram of Fig. 10.

Furthermore, in the single routing mode, CAN frames received from the internal Rack CAN channel A (R-CAN A) are forwarded to the external CAN channel A or B depending on the value of the CAN channel field of the packet ID of the frame. E.g., if the value of the CAN channel field is "0", the external channel A is selected. If the value of the CAN channel field is "1", the external channel B is selected. Forward frames received from the internal Rack channel B are always forwarded to the external CAN channel B regardless of the value of the channel field, as indicated in the right diagram of Fig. 10.

Fig. 11 shows an explanatory functional diagram of a dual routing mode.

In the dual routing mode, CAN frames received from the external CAN channel A are forwarded to the internal Rack CAN channel A, and CAN frames received from the external CAN channel B are forwarded to the internal Rack CAN channel B, as indicated in the left diagram of Fig. 11.

Furthermore, in the dual routing mode, CAN frames received from the internal Rack CAN channel A (R-CAN A) are forwarded to the external CAN channel A and CAN frames received from the internal Rack channel B are forwarded to the external CAN channel B, regardless of the value of the CAN channel field of the packet ID of the frame, as indicated in the right diagram of Fig. 11.

As an example for a usage of the routing modes, the gateway device 44 may be configured to send requests to the CID via external CAN A/B channels and via internal Rack CAN channel A in the single routing mode and via Rack CAN A/B channels in the dual routing mode

To summarize, the present invention relates to a gateway apparatus and method for establishing a communication connection between an internal bus system which connects internal components of a unit device of a distributed brake control system in a rail vehicle and an external bus system which connects different ones of said unit device of the distributed brake control system. A routing mode between channels of the internal bus system and channels of the external bus system is configured in response to a supplied routing control information.

It is noted that present invention is not restricted to the above preferred embodiments and can be implemented in any brake systems of trains, locomotives, coaches, freight cars, trams, metros, monorails, specific rail vehicles or on-track machines. Furthermore, the proposed brake control framework defines a modular architecture whereby applications for various braking technologies and their combinations are supported, such as pneumatic brakes, hydraulic brakes, electro-dynamic brakes, electro-magnetic track brakes, electro-magnetic brakes, eddy current brakes and hydrodynamic brakes. Other technologies might be supported by developing additional LADs which are compliant to the integrated brake control framework. Moreover, the integrated brake control framework may provide tools for various states in the implementation of a braking project, such as system configuration, allocation of brake functions, brake system logic design, testing and maintenance.

## Claims

1. A gateway apparatus (44), comprising:
a connector (34) for providing connections to at least two channels of an internal CAN bus system (IL1) which connects internal components (163, 164, 166, 168) of a unit device (167, 169) of a distributed brake control system in a rail vehicle, and
dual connectors (38, 39) for providing connections to at least two channels of an external CAN bus system (EL1) which connects different ones of said unit device (167, 169) of said distributed brake control system, wherein one of this dual connectors (38, 39) is used for providing a connection to an external coding device via a one-wire connection,
wherein said apparatus (44) is adapted to configure a routing mode between said at least two channels of said internal CAN bus system (IL1) and said at least two channels of said external CAN bus system (EL1) in response to a routing control information supplied by said external coding device, and
wherein said apparatus (44) is adapted to route extended CAN frames of said internal and external CAN bus systems (IL1, EL1) according to the most significant bit of a CAN identification code of these frames.

2. The apparatus according to claim 1, wherein said internal CAN bus system (IL1) and said external CAN bus system (EL1) are dual redundant controller area networks, and wherein said channels are controller area network channels.

3. The apparatus according to claim 1 or 2, wherein said apparatus (44) is adapted to establish said communication connection between local application devices (166) and central intelligence devices (163, 164) of said distributed brake control system.

4. The apparatus according to any one of the preceding claims, wherein said apparatus (44) is adapted to play the role of a unit master within said unit devices (163, 164, 166, 168).

5. The apparatus according to claim 4, wherein said apparatus (44) is adapted to provide addressing information to local application devices (166) of the same unit device (169) in the form of unit master broadcast messages sent to said internal bus system (IL1).

6. The apparatus according to claim 5, wherein said addressing information comprises a unit identification and a subnet identification.

7. The apparatus according to any one of the preceding claims, wherein said apparatus (44) is adapted to independently configure transmission rates on said channels.

8. The apparatus according to any of the preceding claims, wherein said apparatus (44) is adapted to configure one of a default routing mode, a single routing mode and a dual routing mode in response to said routing control information.

9. A unit device of a distributed brake control system comprising an apparatus according to any one of claims 1 to 8 and at least one of a central intelligence device (163, 164) and a local application device (166) connected to said apparatus via said internal CAN bus system (IL1).

10. A brake control system comprising a plurality of unit devices according to claim 9 connected via said external CAN bus system (EL1).

11. The system according to claim 10, further comprising a coding device for supplying said routing information to said apparatus.

12. A method of establishing a communication connection between at least two channels of an internal CAN bus system (IL1) which connects internal components (163; 166; 82) of a unit device (167; 169; 80) of a distributed brake control system in a rail vehicle and at least two channels of an external CAN bus system (EL1) which connects different ones of said unit device (163; 166; 82) of said distributed brake control system, said method for use in the gateway apparatus of claim 1 and comprising the step of configuring a routing mode between said at least two channels of said internal CAN bus system and said at least two channels of said external CAN bus system by the gateway apparatus (44) in response to a routing control information supplied by an external coding device, wherein extended CAN frames of said internal and external CAN bus systems (IL1, EL1) are routed according to the most significant bit of a CAN identification code of these frames.

13. A computer program comprising instructions which, when the program is executed by a computer, cause the computer to carry out all the steps of the method according to claim 12.

## Patentansprüche

1. Eine Gateway-Vorrichtung (44), umfassend:
einen Verbinder (34) zum Bereitstellen von Verbindungen mit mindestens zwei Kanälen eines internen CAN-Bussystems (IL1), das interne Komponenten (163, 164, 166, 168) einer Einheiteneinrichtung (167, 169) eines verteilten Bremssteuerungssystems bei einem Schienenfahrzeug verbindet, und
Doppelverbinder (38, 39) zum Bereitstellen von Verbindungen mit mindestens zwei Kanälen eines externen CAN-Bussystems (EL1), das unterschiedliche Komponenten der Einheiteneinrichtung (167, 169) des verteilten Bremssteuerungssystems verbindet, wobei einer dieser Doppelverbinder (38, 39) zum Bereitstellen einer Verbindung zu einer externen Codiereinrichtung über eine Ein-Kabel-Verbindung verwendet wird,
wobei die Vorrichtung (44) eingerichtet ist zum Konfigurieren eines Routing-Modus zwischen den mindestens zwei Kanälen des internen CAN-Bussystems (IL1) und den mindestens zwei Kanälen des externen CAN-Bussystems (EL1) in Reaktion auf eine durch die externe Codiereinrichtung gelieferte Routing-Steuerungsinformation, und
wobei die Vorrichtung (44) eingerichtet ist zum Routing erweiterter CAN-Rahmen des internen und externen CAN-Bussystems (IL1, EL1) entsprechend dem höchstwertigen Bit eines CAN-Identifizierungscodes dieser Rahmen.

2. Vorrichtung nach Anspruch 1, wobei das interne CAN-Bussystem (IL1) und das externe CAN-Bussystem (EL1) dualredundante Controller Area Networks sind und wobei die Kanäle Controller-Area-Network-Kanäle sind.

3. Vorrichtung nach Anspruch 1 oder 2, wobei die Vorrichtung (44) eingerichtet ist zum Aufbau der Kommunikationsverbindung zwischen lokalen Anwendungseinrichtungen (166) und Einrichtungen zentraler Intelligenz (163, 164) des verteilten Bremssteuerungssystems.

4. Vorrichtung nach einem der vorstehenden Ansprüche, wobei die Vorrichtung (44) eingerichtet ist, um die Rolle einer Master-Einheit in den Einheiteneinrichtungen (163, 164, 166, 168) zu übernehmen.

5. Vorrichtung nach Anspruch 4, wobei die Vorrichtung (44) eingerichtet ist, um Adressinformation für lokale Anwendungseinrichtungen (166) der gleichen Einheiteneinrichtung (169) in Form von zum internen Bussystem (IL1) gesendeten Master-Einheit-Broadcast-Nachrichten bereitzustellen.

6. Vorrichtung nach Anspruch 5, wobei die Adressinformation eine Einheitenidentifizierung und eine Teilnetzidentifizierung umfasst.

7. Vorrichtung nach einem der vorstehenden Ansprüche, wobei die Vorrichtung (44) eingerichtet ist, um Übertragungsraten auf den Kanälen unabhängig zu konfigurieren.

8. Vorrichtung nach einem der vorstehenden Ansprüche, wobei die Vorrichtung (44) eingerichtet ist, um in Reaktion auf die Routing-Steuerungsinformation einen standardmäßigen Routing-Modus oder einen einzelnen Routing-Modus oder einen dualen Routing-Modus zu konfigurieren.

9. Einheiteneinrichtung eines verteilten Bremssteuerungssystems, umfassend eine Vorrichtung nach einem der Ansprüche 1 bis 8 und mindestens eine von einer Einrichtung zentraler Intelligenz (163, 164) und einer lokalen Anwendungseinrichtung (166), über das interne CAN-Bussystem (IL1) mit der Vorrichtung verbunden.

10. Bremssteuerungssystem, umfassend eine Mehrzahl von über das externe CAN-Bussystem (EL1) mit der Vorrichtung verbundenen Einheiteneinrichtungen nach Anspruch 9.

11. System nach Anspruch 10, ferner umfassend eine Codiereinrichtung zum Liefern der Routing-Information zu der Vorrichtung.

12. Verfahren zum Aufbau einer Kommunikationsverbindung zwischen mindestens zwei Kanälen eines internen CAN-Bussystems (IL1), das interne Komponenten (163; 166; 82) einer Einheiteneinrichtung (167; 169; 80) eines verteilten Bremssteuerungssystems bei einem Schienenfahrzeug verbindet, und mindestens zwei Kanälen eines externen CAN-Bussystems (EL1), das unterschiedliche Komponenten der Einheiteneinrichtung (163; 166; 82) des verteilten Bremssteuerungssystems verbindet, wobei das Verfahren zur Verwendung in der Gateway-Vorrichtung nach Anspruch 1 dient und den Schritt des Konfigurierens eines Routing-Modus zwischen den mindestens zwei Kanälen des internen CAN-Bussystems und den mindestens zwei Kanälen des externen CAN-Bussystems durch die Gateway-Vorrichtung (44) in Reaktion auf eine durch eine externe Codiereinrichtung gelieferte Routing-Steuerungsinformation umfasst, wobei erweiterte CAN-Rahmen des internen und externen CAN-Bussystems (IL1, EL1) entsprechend dem höchstwertigen Bit eines CAN-Identifizierungscodes dieser Rahmen weitergeleitet werden.

13. Rechnerprogramm, umfassend Anweisungen, die bei Ausführung des Programms durch einen Rechner den Rechner veranlassen, alle Schritte des Verfahrens nach Anspruch 12 durchzuführen.

## Revendications

1. Installation (44) formant passerelle, comportant :
un connecteur (34) pour fournir des connexions à au moins deux canaux d'un système (IL1) de bus interne CAN qui connecte des composants (163, 164, 166, 168) internes d'un dispositif (167, 169) unité d'un système de commande de frein réparti dans un véhicule ferroviaire, et
des connecteurs (38, 39) duaux pour fournir une connexion à au moins deux canaux d'un système (EL1) de bus CAN externe qui connecte différents éléments du dispositif (167, 169) unité du système de commande à frein réparti, dans lequel l'un de ces connecteurs (38, 39) duaux est utilisé pour fournir une connexion à un dispositif de codage externe par l'intermédiaire d'une connexion à fil unique,
dans laquelle l'installation (44) est conçue pour configurer un mode d'acheminement en les au moins deux canaux du système (IL1) du bus CAN interne et les au moins deux canaux du système (EL1) de bus CAN externe en réponse à une information de commande d'acheminement fournie par le dispositif de codage externe, et
dans laquelle l'installation (44) est conçue pour acheminer des trames CAN étendues des systèmes (IL1, EL1) de bus CAN externe et interne conformément au bit le plus significatif d'un code d'identification CAN de ces trames.

2. Installation suivant la revendication 1, dans laquelle le système (IL1) de bus CAN interne et le système (EL1) de bus CAN externe sont des réseaux de zone de dispositif de commande redondant dual, et dans lequel les canaux sont des canaux de réseaux de zone de dispositif de commande.

3. Installation suivant la revendication 1 ou 2, dans laquelle l'installation (44) est conçue pour établir la connexion de communication entre le dispositif (166) d'application local et les dispositifs (163, 164) d'intelligence centrale du système de commande de frein réparti.

4. Installation suivant l'une quelconque des revendications précédentes, dans laquelle l'installation (44) est conçue pour jouer le rôle d'un maître unité à l'intérieur des dispositifs (163, 164, 166, 168) unité.

5. Installation suivant la revendication 4, dans laquelle l'installation (44) est conçue pour fournir des informations d'adressage aux dispositifs (166) d'application locaux du même dispositif (169) unité sous la forme de messages de diffusion maître unité envoyés au système (IL1) de bus interne.

6. Installation suivant la revendication 5, dans laquelle l'information d'adressage comporte une identification d'unité et une identification de sous-réseau.

7. Installation suivant l'une quelconque des revendications précédentes, dans laquelle l'installation (44) est conçue pour configurer de manière indépendante des taux de transmission sur les canaux.

8. Installation suivant l'une quelconque des revendications précédentes, dans laquelle l'installation (44) est conçue pour configurer l'un d'un mode d'acheminement par défaut, d'un mode d'acheminement unique et d'un mode d'acheminement dual en réponse aux informations de commande d'acheminement.

9. Dispositif unité d'un système de commande de frein réparti comportant une installation suivant l'une quelconque des revendications 1 à 8 et au moins l'un d'un dispositif (163, 164) d'intelligence centrale et d'un dispositif (166) d'application local connecté à l'installation par l'intermédiaire du système (IL1) de bus CAN interne.

10. Système de commande de frein comportant une pluralité de dispositifs unités suivant la revendication 9 connectés par l'intermédiaire du système (EL1) de bus CAN externe.

11. Système suivant la revendication 10, comportant en outre un dispositif de codage pour fournir l'information d'acheminement à l'installation.

12. Procédé pour établir une connexion de communication entre au moins deux canaux d'un système (IL1) de bus CAN interne qui connecte des composants (163; 166; 82) internes d'un dispositif (167; 169; 80) unité d'un système de commande de frein réparti dans un véhicule ferroviaire et au moins deux canaux d'un système (EL1) de bus CAN externe qui connecte différentes unités du dispositif unité (163; 166; 82) du système de commande de frein réparti, le procédé à utiliser dans l'installation formant passerelle de la revendication 1 et comportant l'étape de configuration d'un mode d'acheminement entre les au moins deux canaux du système de bus CAN interne et les aux moins deux canaux du système de bus CAN externe par l'installation (44) formant passerelle en réponse à une information de commande d'acheminement fournie par le dispositif de codage externe, dans lequel des trames CAN étendues des systèmes (IL1, EL1) de bus CAN externe et interne sont acheminées conformément au bit le plus significatif d'un code d'identification CAN de ces trames.

13. Programme d'ordinateur comportant des instructions qui, lorsque le programme est exécuté par un ordinateur, fait que l'ordinateur effectue toutes les étapes du procédé suivant la revendication 12.
